# FASCICULE DE BREVET EUROPEEN

(11) **EP 3 086 950 B1**
(45) Date de publication et mention de la délivrance du brevet: **31.07.2019**
(21) Numéro de dépôt: 14805842.3
(22) Date de dépôt: 27.11.2014
(51) Int. Cl.: B60C 9/00

(54) **ELÉMENT DE RENFORT POUR PNEUMATIQUE COMPRENANT UN FIL SACRIFICIEL**
VERSTÄRKUNGSELEMENT FÜR REIFEN MIT EINEM OPFERFADEN
REINFORCING ELEMENT FOR A TYRE COMPRISING A SACRIFICIAL THREAD

(30) Priorité: 24.12.2013 FR 1363509
(43) Date de publication de la demande: 02.11.2016
(73) Titulaire: Compagnie Générale des Etablissements Michelin, 63000 Clermont-Ferrand (FR)
(72) Inventeur: LARDJANE, Aurore, F-63040 Clermont-Ferrand Cedex 9 (FR); TADJOA, Odile, F-63040 Clermont-Ferrand Cedex 9 (FR); BARBOUTEAU, Joël, F-63040 Clermont-Ferrand Cedex 9 (FR); THUILLIEZ, Anne-Lise, F-63040 Clermont-Ferrand Cedex 9 (FR); BERTHO, Pascal, F-63040 Clermont-Ferrand Cedex 9 (FR)
(74) Mandataire: Desbordes, Guillaume
(86) Numéro de dépôt international: PCT/EP2014/075755
(87) Numéro de publication internationale: WO 2015/096949

(56) Documents cités:
- EP-A1- 0 176 139
- EP-A2- 0 550 005
- WO-A1-2012/017399
- WO-A1-2013/117477

## Description

L'invention concerne les éléments de renfort pour pneumatiques. Elle s'applique à tout type de pneumatiques pour tout type de véhicules.

Un pneumatique comprend, de façon classique, deux bourrelets circonférentiels destinés à permettre l'accrochage du pneumatique sur la jante. Chaque bourrelet comprend une tringle annulaire de renfort.

On connait de l'état de la technique un pneumatique comprenant une tringle comprenant une couche interne et une couche externe. La couche interne est constituée d'un fil en acier. Le fil d'acier est cintré sur lui-même et ses deux extrémités libres soudées afin de former un anneau sensiblement circulaire. La couche externe comprend également un fil en acier enroulé en hélice autour de la couche interne sur plusieurs enroulements circonférentiels. Les deux extrémités libres sont reliées entre elles par un manchon de liaison.

Chaque fil des couches interne et externe est revêtu d'un revêtement d'un alliage de cuivre et d'étain, ici du bronze. Ce revêtement permet d'améliorer l'adhésion entre la tringle et la composition de caoutchouc du bourrelet dans laquelle la tringle est noyée. En outre, ce revêtement est censé protéger l'acier des monofilaments de l'action des agents corrosifs, par exemple de l'eau.

Or, on a observé que dans des conditions particulièrement humides, le fil de couche interne, mais surtout le fil de couche externe, étaient rapidement dégradés par l'action des agents corrosifs entrainant d'une part une dégradation des propriétés mécaniques de la tringle et, d'autre part, une perte significative d'adhésion entre la tringle et la composition de caoutchouc adjacente du bourrelet dans laquelle la tringle est noyée.

On a également observé une perte d'adhésion similaire dans d'autres endroits du pneumatique, par exemple entre des armatures de carcasse, de travail ou de protection et la composition de caoutchouc adjacente.

Le document EP0176139 divulgue des éléments de renfort comprenant plusieurs couches C1, C2, C3. La couche C3 est revêtue d'une couche de laiton et la couche C2 est revêtue d'une couche comprenant du Zn ou un alliage comprenant au moins 50% de Zn.

Le document EP0550005 divulgue un élément de renfort présentant une résistance à la corrosion améliorée. Cet élément de renfort comprend plusieurs couches. Les fils de la couche externe sont revêtus d'un alliage Zn/AI et les fils des couches internes sont revêtus de Zn.

Le document WO2012/017399 divulgue des éléments de renfort pour sommet. Ce document indique qu'une meilleure résistance à la corrosion du ou des fils centraux peut être obtenue avec un revêtement de Zn/Mn du fil central et revêtement de laiton des fils de couche.

Le document WO2013/117477 décrit un élément de renfort en acier revêtu d'un seul revêtement, pouvant avoir comme fonction d'améliorer le tréfilage et l'adhésion au caoutchouc ou d'améliorer la résistance à la corrosion et/ou l'adhésion du renfort au caoutchouc.

L'invention a pour but de mettre au point un élément de renfort permettant de limiter la perte d'adhésion due à l'action des agents corrosifs.

A cet effet, l'invention a pour objet un élément de renfort pour pneumatique comprenant un ou plusieurs fils comprenant une âme en acier et :
- un premier revêtement d'une première partie de l'âme du ou d'un des fils en acier réalisé en un premier métal ou en un premier alliage de métaux, le premier métal ou au moins l'un des métaux du premier alliage appartenant à un premier couple oxydant/réducteur dont le potentiel standard E°1 est strictement inférieur au potentiel standard E°0 du couple Fe²⁺/Fe, et
- un deuxième revêtement d'une deuxième partie de l'âme du ou d'un des fils en acier réalisé en un deuxième alliage de métaux, le deuxième alliage de métaux étant respectivement distinct du premier métal ou du premier alliage de métaux, le deuxième revêtement étant un alliage cuivre-étain.

L'élément de renfort de l'invention est bien plus résistant à l'action des agents corrosifs et conserve un bon niveau d'adhésion avec la composition de caoutchouc du bourrelet dans laquelle il est noyé.

En effet, dans l'état de la technique, le fer est le métal le plus réducteur d'entre les métaux de l'acier et ceux du revêtement.. Ainsi, le fer est préférentiellement oxydé par l'eau. Dans l'invention, le métal le plus réducteur est le métal ou un des métaux de l'alliage du premier couple. Le métal ou un des métaux de l'alliage du premier couple est donc préférentiellement oxydé par l'eau et constitue donc une anode sacrificielle permettant de protéger l'acier du ou des fils ainsi que le deuxième revêtement. On préserve ainsi les propriétés liées au deuxième revêtement et on limite la perte d'adhésion. l'endurance de son adhésion.

Par définition, le potentiel standard d'un couple oxydant/réducteur est mesuré dans des conditions standards, c'est-à-dire à l'aide d'une électrode standard à hydrogène (ESH) standard à 25°C sous une pression de 1 atmosphère avec, pour chaque espèce aqueuse une concentration égale à 1 mol.L-1 et pour, chaque espèce solide, une activité chimique égale à 1 (espèce pure). Dans ces conditions, le potentiel standard E°0 du couple Fe²⁺/Fe₍ₛ₎ est égal à -0,44 V/ESH.

Chaque premier et deuxième revêtement pourra ainsi comprendre un métal sensiblement pur ou bien un alliage de métaux sensiblement purs, le deuxième revêtement étant un alliage cuivre-étain. Par métal sensiblement pur, on entend un métal comprenant au moins 90%, de préférence au moins 95% et préférentiellement au moins 99% d'un unique élément chimique métallique. Par un alliage de métaux sensiblement purs, on entend un mélange d'au moins deux métaux distincts, chaque métal étant sensiblement pur, et constituant à au moins eux deux plus de 50 % en masse de l'alliage. Ainsi, un alliage peut comprendre des additifs apportant des propriétés spécifiques à l'alliage en fonction de son utilisation. On citera comme exemple d'alliages le laiton (alliage cuivre-zinc) ou encore le bronze (alliage cuivre-étain).

De préférence, la couche du premier ou du deuxième revêtement revêtant l'âme correspondante présente une épaisseur supérieure à 30 µm et inférieure à 100 µm.

Dans un mode de réalisation préféré, le premier revêtement est du zinc. Le potentiel standard du couple Zn²⁺/Zn₍ₛ₎ est égal à -0,76 V/ESH. En variante, d'autres métaux d'autres couples oxydant/réducteur peuvent être utilisés, par exemple choisi parmi d'autres métaux tels que Li, Cs, Rb, K, Ba, Sr, Ca, Ra, Na, Mg, Be, Al, Ti, Zr, Mn, V et Nb appartenant à des couples oxydant/réducteur dont le potentiel standard est inférieur à celui du couple Fe²⁺/Fe₍ₛ₎.

Le deuxième revêtement est un alliage cuivre-étain. Le potentiel standard du couple Cu²⁺/Cu₍ₛ₎ est égal à 0,34 V/ESH. Le potentiel standard du couple Sn²⁺/Sn₍ₛ₎ est égal à -0,14 V/ESH. Le revêtement en alliage cuivre-étain est particulièrement sensible à la corrosion ce qui rend l'invention particulièrement avantageuse avec un tel revêtement.

Au moins l'un des métaux du deuxième alliage appartient à un deuxième couple oxydant/réducteur.

Le potentiel standard E°2 du deuxième couple oxydant/réducteur est strictement supérieur au potentiel standard E°1 du premier couple oxydant/réducteur.

Le potentiel standard E°2 du deuxième couple oxydant/réducteur est strictement supérieur au potentiel standard E°0 du couple Fe²⁺/Fe.

De préférence, chaque premier et deuxième couple oxydant/réducteur est du type Mn⁺/M₍ₛ₎ dans lequel M appartient au revêtement correspondant. Dans ces couples, n est préférentiellement égal à 1, 2 ou 3.

Dans un premier mode de réalisation, l'élément de renfort est sensiblement de révolution autour d'un axe et comprend :
- une couche interne, et
- une couche externe comprenant au moins un fil de couche externe enroulé en hélice autour de la couche interne sur plusieurs enroulements circonférentiels, le ou des fils de couche externe comprenant la première partie revêtue par le premier revêtement.

Par enroulement circonférentiel, on entend un enroulement autour de l'axe principal de l'élément de renfort et s'étendant selon la direction circonférentielle autour de cet axe. Le fil de couche externe étant enroulé en hélice autour de la couche externe, chaque enroulement circonférentiel oscille de part et d'autre d'un plan médian (c'est-à-dire passant par le centre de la couche interne) sensiblement perpendiculaire à l'axe de l'élément de renfort.

De préférence, l'élément de renfort comprend une couche intermédiaire comprenant au moins un fil de couche intermédiaire enroulé en hélice autour de la couche interne sur plusieurs enroulements circonférentiels, le ou les fils de couche externe étant enroulés en hélice autour de la couche intermédiaire sur plusieurs enroulements circonférentiels.

Ainsi, le premier revêtement étant disposé sur la couche externe, il protège la couche interne, et éventuellement la couche intermédiaire, de l'action des agents corrosifs qui sont captés par le premier revêtement présent sur le ou les fils de la couche externe.

Dans un deuxième mode de réalisation, l'élément de renfort est sensiblement de révolution autour d'un axe et comprend plusieurs enroulements circonférentiels d'au moins un fil agencés axialement les uns à côté des autres sur plusieurs couches radialement superposées les unes sur les autres.

Avantageusement, chaque fil de chaque première et deuxième partie revêtue comprenant respectivement au moins une première et une deuxième extrémité libre, la tringle comprend un manchon de liaison des première et deuxième extrémités libres.

Le ou les fils de l'élément de renfort peuvent être à section circulaire, elliptique, polygonale, carrée ou bien encore rectangulaire.

De préférence, la première partie forme au moins un enroulement circonférentiel du ou des fils. Ainsi, l'élément de renfort est protégé sur toute sa circonférence.

De préférence, chaque fil ou monofilament est préférentiellement en acier perlitique (ou ferrito-perlitique) au carbone désigné ci-après par "acier au carbone".. Lorsqu'un acier au carbone est utilisé, sa teneur en carbone (% en poids d'acier) est de préférence comprise entre 0,1% et 0,9%.

Dans un mode de réalisation, un ou plusieurs fils peuvent être dans un matériau différent de l'acier. Dans une première variante, au moins un fil comprend plusieurs fibres textiles multifilamentaires chacune surtordue puis assemblées entre elles pour former le fil. Dans une deuxième variante, au moins un fil est dans un matériau comprenant une fibre textile multifilamentaire noyée dans une matrice organique.

Par définition, une fibre textile est non métallique. Une fibre textile multifilamentaire comprend des filaments textiles élémentaires agencés côte à côte et orientés de façon sensiblement unidirectionnelle. Les filaments élémentaires sont donc sensiblement parallèles entre eux, à quelques chevauchements près.
De telles fibres sont par exemple choisies dans le groupe constitué par les fibres d'alcool polyvinylique, de polyamide aromatique (ou "aramide"), les fibres polyester, polyester aromatique, polyéthylène, les fibres de cellulose, rayonne, viscose, polyphénylène benzobisoxazole (ou "PBO"), polyéthylène naphténate ("PEN"), les fibres de verre, de carbone, de silice, les fibres céramiques, et les mélanges de telle fibres. On préfère utiliser des fibres choisies dans le groupe constitué par les fibres de verre, les fibres de carbone et les mélanges de telles fibres.

Par matrice organique, on entend toute matrice comportant, en poids, plus de 50%, de préférence plus de 75% et plus préférentiellement plus de 90 % de matière organique. La matrice organique peut contenir des minéraux et/ou des métaux provenant de son procédé de fabrication, mais également des additifs minéraux et/ou métalliques volontairement ajoutés. Ainsi, une matrice organique peut, par exemple, être une matrice polymérique thermodurcissable, par exemple à base de polyester insaturé, de polyépoxyde, de dérivé phénolique ou d'aminoplaste, ou encore thermostable, par exemple à base de cyanate, de polybismaléimide, de polyimide, de polyamidoimide, ou encore thermoplastique, par exemple à base de polypropylène, de polyamide, de polyester saturé, de polyoxyméthylène, de polysulfone et polyéthersulfone, de polyéthercétone et polyétheréthercetone, de polysulfure de phénylène, de polyétherimide, ou encore d'élastomère thermoplastique ou réticulé, par exemple à base de polyuréthanne, de silicone ou de caoutchouc ou bien une matrice organique issue d'un mélange de ces matrices.

De préférence, la matrice organique est une résine thermodurcie, de préférence réticulée. A titre de résine réticulable, on utilise plus préférentiellement une résine polyester (i.e., à base de polyester insaturé) ou une résine vinylester. Plus préférentiellement encore, on utilise une résine vinylester.

L'élément de renfort peut être une tringle, un câble comprenant un ou plusieurs fils en acier ou encore un assemblage de torons généralement appelé câble multitorons. Les fils ou les torons sont assemblés par retordage ou par câblage. On rappelle qu'il existe deux techniques possibles d'assemblage:
- soit par retordage : les fils ou les torons subissent à la fois une torsion collective et une torsion individuelle autour de leur propre axe, ce qui génère un couple de détorsion sur chacun des fils ou torons ;
- soit par câblage: les fils ou les torons ne subissent qu'une torsion collective et ne subissent pas de torsion individuelle autour de leur propre axe.

Dans un mode de réalisation, l'élément de renfort comprend plusieurs fils et est du type gommé in situ, c'est-à-dire que l'élément de renfort est gommé de l'intérieur, pendant sa fabrication même par une gomme de remplissage. De tels éléments de renfort sont bien connus de l'homme du métier.

L'invention a aussi pour objet une tringle comprenant un élément de renfort tel que défini ci-dessus.

Un autre objet de l'invention est un pneumatique comprenant au moins un élément de renfort tel que défini ci-dessus ou une tringle telle que définie ci-dessus.

L'élément de renfort selon l'invention peut être monté sur tout type de pneumatique. Par exemple, l'élément de renfort peut être destinée à un pneumatique pour des véhicules industriels choisis parmi les véhicule de tourisme, les camionnettes, des véhicules lourds tels que "Poids lourd" - i.e., métro, bus, engins de transport routier (camions, tracteurs, remorques), véhicules hors-la-route, aéronefs -, engins agricoles ou de génie civil, autres véhicules de transport ou de manutention.

Dans un mode de réalisation, le pneumatique comprenant un sommet surmonté d'une bande de roulement, deux flancs, deux bourrelets, chaque flanc reliant chaque bourrelet au sommet, une armature de carcasse ancrée dans chacun des bourrelets et s'étendant dans les flancs et jusque dans le sommet, une armature de sommet radialement intercalée entre l'armature de carcasse et la bande de roulement, l'armature de sommet comprend l'élément de renfort tel que défini ci-dessus.

Dans un mode de réalisation, l'armature de sommet comprend une armature de travail comprenant l'élément de renfort et une armature de protection radialement intercalée entre l'armature de travail et la bande de roulement. En variante, l'armature de protection comprend l'élément de renfort tel que défini ci-dessus.

Dans un mode de réalisation préféré, le pneumatique est sensiblement de révolution autour d'un axe principal et comprend deux bourrelets, chaque bourrelet étant renforcé avec une tringle annulaire sensiblement de révolution autour de l'axe principal du pneumatique, la tringle annulaire comprenant l'élément de renfort tel que défini ci-dessus.

Selon le poste de l'élément de renfort, le mécanisme d'arrivée des agents corrosifs est différent.

Dans le cas d'un élément de renfort positionné dans l'armature de sommet, les agents corrosifs pénètrent au contact de l'élément de renfort suite à une agression de l'armature de sommet, par exemple suite à une perforation. Dans ce cas, les agents corrosifs migrent le long des éléments de renforts au contact de ces derniers.

Dans le cas d'une tringle, les agents corrosifs migrent au travers du mélange adjacent jusqu'à atteindre la tringle. Chaque bourrelet est particulièrement exposé aux agents humides ce qui fait de la tringle un élément de renfort particulièrement avantageux lorsqu'elle est conforme à l'invention.

L'invention sera mieux comprise à la lecture de la description qui va suivre, donnée uniquement à titre d'exemple non limitatif et faite en se référant aux dessins dans lesquels:
- la figure 1 est une vue en coupe d'un pneumatique selon l'invention;
- la figure 2 est une vue en coupe perpendiculaire à l'axe de l'élément de renfort (supposée rectiligne et au repos) d'un élément de renfort selon un premier mode de réalisation de l'invention formant une tringle ;
- la figure 3 est une vue en perspective de l'élément de renfort de la figure 2 ;
- la figure 4 est une vue schématique de fils de l'élément de renfort de la figure 2 ;
- la figure 5 est une vue analogue à celle de la figure 2 d'un élément de renfort selon un deuxième mode de réalisation de l'invention formant une tringle ;
- la figure 6 est une vue analogue à celle de la figure 2 d'un élément de renfort selon un troisième mode de réalisation formant un câble, et
- la figure 7 est une vue analogue à celle de la figure 2 d'un élément de renfort selon un quatrième mode de réalisation formant un câble multitorons.

Dans les figures, on a représenté un repère X, Y, Z correspondant aux directions habituelles respectivement axiale (X), radiale (Y) et circonférentielle (Z) d'un pneumatique.

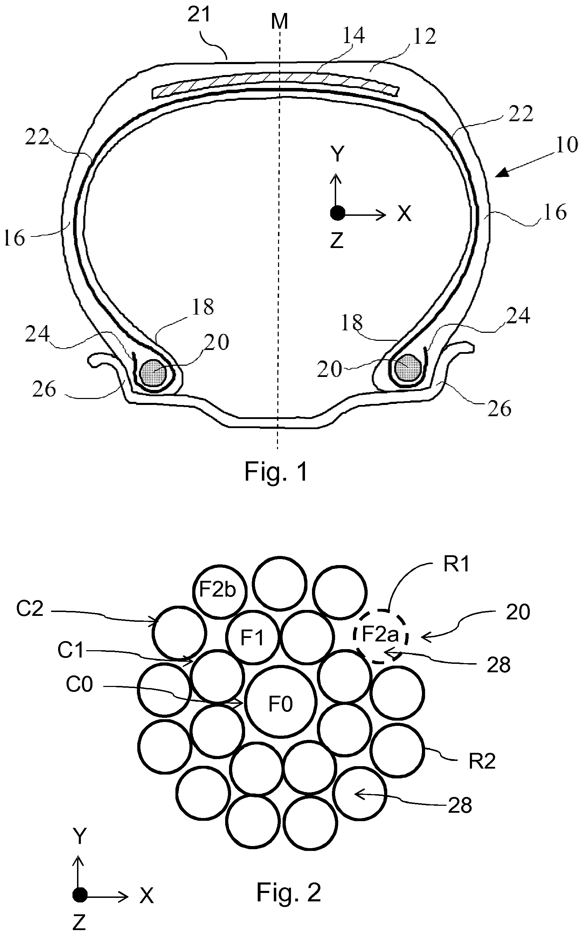

On a représenté sur la figure 1 un pneumatique selon l'invention désigné par la référence générale 10. En l'espèce, le pneumatique 10 est destiné à être monté sur un véhicule terrestre, ici un véhicule de tourisme, et a pour dimensions 215/70 R16. Le pneumatique 10 est sensiblement de révolution autour d'un axe principal sensiblement parallèle à l'axe X.

Le pneumatique 10 comporte un sommet 12 renforcé par un sommet 14, deux flancs 16 et deux bourrelets 18, chacun de ces bourrelets 18 étant renforcé avec une tringle 20 annulaire. Le sommet 14 est surmonté d'une bande de roulement 21. Une armature de carcasse 22 est enroulée autour des deux tringles 20 dans chaque bourrelet 18 et comprend un retournement 24 disposé vers l'extérieur du pneumatique 10 qui est ici représenté monté sur une jante 26. L'armature de carcasse 22 est constituée d'au moins une nappe renforcée par des câbles. L'armature de carcasse 22 est du type radial, c'est-à-dire que les éléments de renfort de l'armature de carcasse 22 sont agencés sensiblement parallèlement les uns aux autres et s'étendent d'un bourrelet 18 à l'autre de manière à former un angle compris entre 80° et 90° avec le plan circonférentiel médian M (plan perpendiculaire à l'axe principal du pneumatique qui est situé à mi-distance des deux bourrelets 18 et passe par le milieu du sommet 14).

Le sommet 14 comprend une armature de sommet (non représentée) radialement intercalée entre l'armature de carcasse 22 et la bande de roulement 21. L'armature de sommet comprend une armature de travail et une armature de protection radialement intercalée entre l'armature de travail et la bande de roulement 21.

On a représenté sur les figures 2 à 4 un élément de renfort selon un premier mode de réalisation de l'invention.

L'élément de renfort est une des deux tringles 20 décrites ci-dessus et présente une forme générale toroïdale de révolution autour de l'axe principal du pneumatique parallèle à la direction X et présente une section sensiblement circulaire. En variante, la tringle 20 présente une section elliptique ou oblongue.

La tringle 20 comprend une couche interne C0, une couche intermédiaire C1 et une couche externe C2. Une telle tringle 20 est généralement appelée tringle tressée.

La couche interne C0 comprend, ici est constituée de, un unique fil F0, par exemple métallique, ici en acier, formant un unique enroulement circonférentiel autour de l'axe X. L'enroulement circonférentiel forme une spire dont l'axe de révolution est commun avec celui de la tringle 20. Ainsi, L'enroulement circonférentiel prend, en projection dans le plan perpendiculaire Y, Z à l'axe X, une forme générale circulaire. Le monofilament F1 présente un diamètre égal à 1,55 mm Les deux extrémités libres du monofilament F0 sont soudées l'une à l'autre.

La couche intermédiaire C1 comprend au moins un fil F1 de couche intermédiaire, ici est constituée d'un unique fil F1 de couche intermédiaire, enroulé en hélice autour de la couche interne C0 sur plusieurs enroulements circonférentiels, ici 8 enroulements circonférentiels. Le monofilament F1 présente un diamètre égal à 1,3 mm. Les deux extrémités libres du monofilament F1 sont reliées l'une à l'autre par un manchon de liaison (non représenté) de la couche intermédiaire C1.

La couche externe C2 comprend au moins un fil de couche externe. En l'espèce, la couche externe C2 comprend deux fils F2a et F2b formant chacun respectivement une première et une deuxième partie des fils de couche externe C2. Chaque fil F2a, F2b est enroulé en hélice autour de la couche interne C0 et de la couche intermédiaire C1 et au contact de cette dernière, sur P enroulements circonférentiels. Le fil F2a comprend M enroulement(s) circonférentiel(s) et le fil F2b comprend N enroulement(s) circonférentiel(s) de sorte que M+N=P. En l'espèce, M=1, N=11 et P=12. Chaque fil F2a, F2b présente un diamètre égal à 1,3 mm.

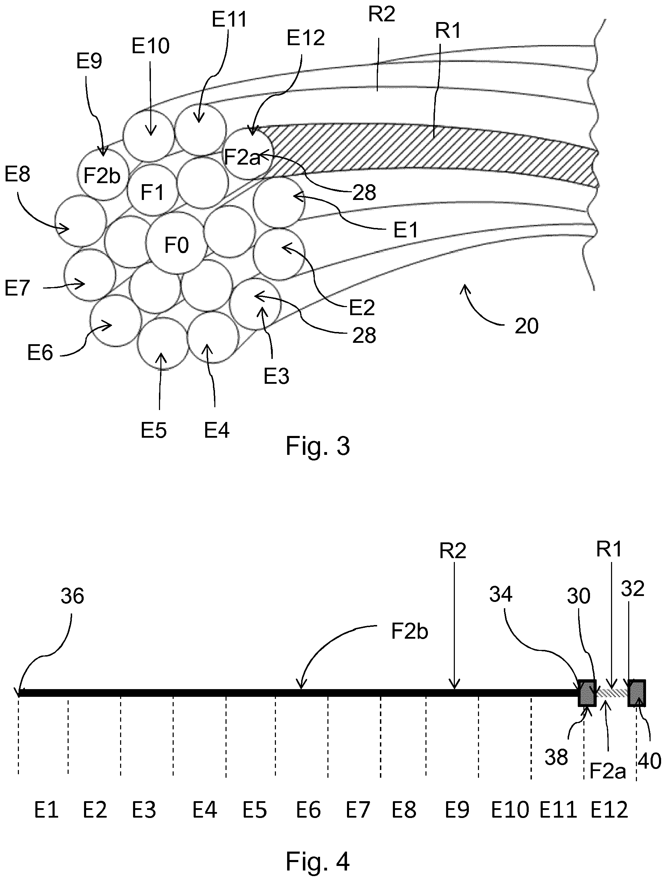

En référence à la figure 4, on a représenté les fils F2a et F2b de façon rectiligne comme s'ils avaient été déroulés de la tringle 20. On observe ainsi le M enroulement circonférentiel E12 du fil F2a et les N enroulements circonférentiels E1 à E11 du fil F2b. Le fil F2a forme ainsi au moins un enroulement circonférentiel des fils F2a, F2b. Le fil F2a formant la première partie des fils de couche externe C2 comprend deux extrémités libres 30, 32. Le fil F2b formant la deuxième partie des fils de couche externe C2 comprend également deux extrémités libres 34, 36. La tringle 20 comprend deux manchons 38, 40 de liaison de l'extrémité libre 30 du fil F2a et de l'extrémité libre 34 du fil F2b, d'une part, et de l'extrémité libre 32 du fil F2a et de l'extrémité libre 36 du fil F2b d'autre part.

Chaque fil F0, F1, F2a, F2b comprend une âme 28 en acier (acier à 0,1% de carbone pour le fil F0 et 0,7% de carbone pour les fils F1, F2a et F2b).

La tringle 20 comprend un premier revêtement R1 revêtant l'âme du fil F2a. Le premier revêtement R1 est représenté sur la figure 1 par des traits pointillés et sur les figures 2 et 3 par une surface hachurée. Le premier revêtement R1 est réalisé en un premier métal ou en un premier alliage de métaux. Le premier métal ou au moins l'un des métaux du premier l'alliage appartient à un premier couple oxydant/réducteur dont le potentiel standard E°1, mesuré dans les conditions standards, est strictement inférieur au potentiel standard du couple Fe²⁺/Fe, qui est égal à = 0,44 V dans des conditions standards. En l'espèce, le premier revêtement est réalisé en un premier métal, ici du zinc. Le zinc appartient à au couple Zn²⁺/Zn₍ₛ₎ dont le potentiel standard est égal à -0,76 V/ESH. On effectue le dépôt du revêtement de zinc de façon classique par électrodéposition à un taux de revêtement de 0,4g/kg d'acier.

La tringle 20 comprend un deuxième revêtement R2 revêtant l'âme du fil F2b. Le deuxième revêtement R2 est réalisé en un deuxième alliage de métaux. Le deuxième alliage de métaux est respectivement distinct du premier métal ou du premier alliage de métaux. Au moins l'un des métaux du deuxième alliage appartient à un deuxième couple oxydant/réducteur dont le potentiel standard E°2, mesuré dans les conditions standards, est strictement supérieur au potentiel standard du premier couple oxydant/réducteur, et strictement supérieur au potentiel standard du couple Fe²⁺/Fe. En l'espèce, le deuxième revêtement est réalisé en un alliage de deux métaux, le cuivre et l'étain formant un alliage cuivre-étain, ici du bronze comprenant 98,5% de cuivre et 1,5% d'étain en masse. Le cuivre et l'étain appartiennent respectivement aux couples Cu²⁺/Cu₍ₛ₎ et Sn²⁺/Sn₍ₛ₎ dont les potentiels standards sont respectivement égaux à 0,34 V/ESH et -0,14 V/ESH. On effectue le dépôt du revêtement de bronze de façon classique par un procédé comprenant plusieurs étapes successives d'immersion du fil dans des bains de plomb, de bronze, de soude et d'acide, puis une étape de séchage et enfin une étape de traitement de surface, par exemple à l'aide de benzofurane. Le taux de revêtement est également égal à 0,4g/kg d'acier.

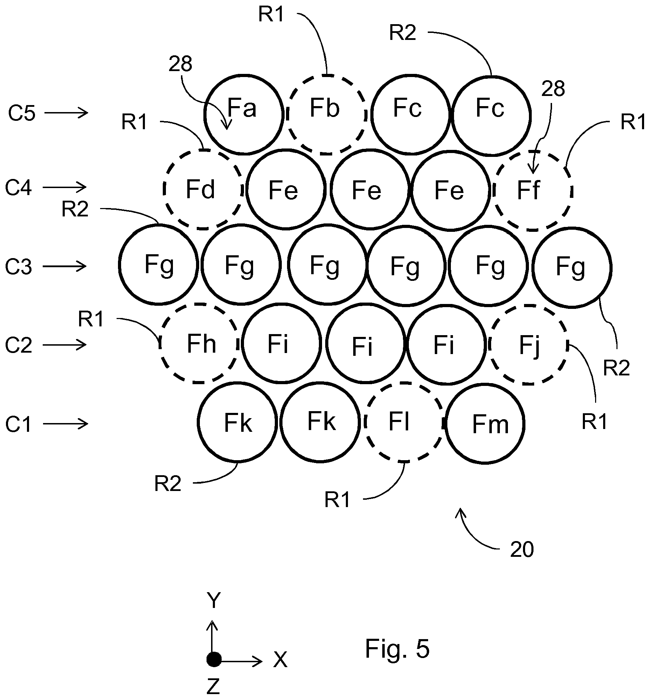

On a représenté sur la figure 5 un élément de renfort 20 selon un deuxième mode de réalisation. Les éléments analogues à ceux représentés sur le premier mode de réalisation sont désignés par des références identiques.

L'élément de renfort 20 selon le deuxième mode de réalisation est également une tringle. A la différence de la tringle selon le premier mode de réalisation, la tringle 20 selon le deuxième mode de réalisation comprend P enroulements circonférentiels d'au moins un fil agencés axialement les uns à côtés des autres sur plusieurs couches C1 à C5 radialement superposées les unes aux autres. Une telle tringle 20 est généralement appelée tringle paquet.

Dans l'exemple de la figure 5, la tringle 20 comprend P=24 enroulements de plusieurs fils Fa (1 enroulement Ea), Fb (1 enroulement Eb), Fc (2 enroulements Ec), Fd (1 enroulement Ed), Fe (3 enroulements Ee), Ff (1 enroulement Ef), Fg (6 enroulements Eg), Fh (1 enroulement Eh), Fi (3 enroulements Ei), Fj (1 enroulement Ej), Fk (2 enroulements Ek), Fl (1 enroulement El) et Fm (1 enroulement Em). Chaque fil Fa-Fm comprend une âme 28 en acier.

La première partie des fils revêtue par le premier revêtement R1, ici du zinc, est formée par les fils Fb, Fd, Ff, Fh, Fj et Fl (contour en traits pointillés). La deuxième partie des fils revêtue par le deuxième revêtement R2, ici du bronze, est formée par les fils Fa, Fc, Fe, Fg, Fi, Fk et Fm.

Comme dans le premier mode de réalisation, les extrémités libres de deux fils circonférentiellement successifs sont reliées entre elles par un manchon de liaison (non représenté) de ces extrémités libres.

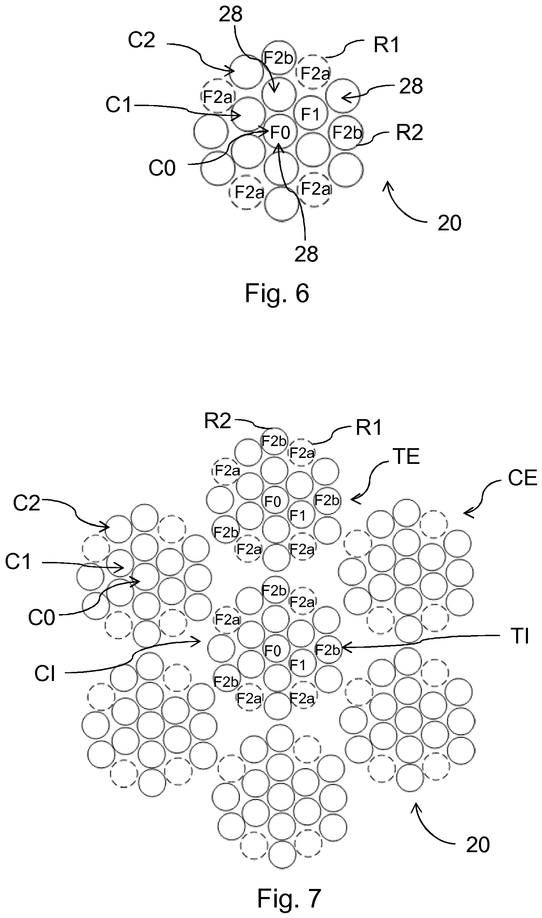

On a représenté sur la figure 6 un élément de renfort 20 selon un troisième mode de réalisation. Les éléments analogues à ceux représentés sur les précédents modes de réalisation sont désignés par des références identiques.

L'élément de renfort 20 selon le troisième mode de réalisation est un câble. En l'espèce, le câble 20 comprend une couche interne C0 constituée d'un fil F0, une couche intermédiaire C1 constituée de 6 fils F1 enroulés en hélice autour de la couche interne C0 et une couche externe C2 constituée de 12 fils F2a, F2b enroulés en hélice autour de la couche intermédiaire C1 et au contact de cette dernière. Chaque fil F0, F1, F2a, F2b comprend une âme 28 en acier.

Les fils F2a sont revêtus d'un premier revêtement R1, ici de zinc, et fils F2b sont revêtus d'un deuxième revêtement R2. En l'espèce, le premier revêtement est réalisé en un premier métal, ici le zinc et le deuxième revêtement est réalisé en un alliage de deux métaux, le cuivre et le zinc formant un alliage cuivre-zinc, ici du laiton comprenant 65% de cuivre et 35% de zinc en masse. Le cuivre et le zinc appartiennent aux couples oxydant/réducteur précédemment décrits. Dans ce mode de réalisation, chaque fil présente un diamètre allant de 0,10 mm à 0,35 mm, ici 0,26 mm. Chaque fil est en acier comprenant un taux de carbone en masse égale à 0,8%.

Le câble 20 de ce troisième mode de réalisation forme un câble utilisé en armature de sommet ou en armature de carcasse. Dans un mode de réalisation, le câble est utilisé en armature de travail. Dans un autre mode de réalisation, le câble est utilisé en armature de protection.

On a représenté sur la figure 7 un élément de renfort 20 selon un quatrième mode de réalisation. Les éléments analogues à ceux représentés sur les précédents modes de réalisation sont désignés par des références identiques.

L'élément de renfort 20 selon le quatrième mode de réalisation est un câble multitorons. Le câble multitorons 20 comprend une couche interne CI du câble comprenant un unique toron interne TI et une couche externe CE du câble comprenant plusieurs torons externes TE, ici six, enroulés en hélice autour de la couche interne CI.

Chaque toron interne TI et externe TE comprend une couche interne C0 constituée d'un fil F0, une couche intermédiaire C1 constituée de 6 fils F1 enroulés en hélice autour de la couche interne C0 et une couche externe C2 constituée de 12 fils F2 enroulés en hélice autour de la couche intermédiaire C1 et au contact de cette dernière. De façon analogue au troisième mode de réalisation, les fils F2a de la couche externe C2 de chaque toron TI, TE sont revêtus d'un premier revêtement, ici de zinc, et les fils F2b de chaque toron TI, TE sont revêtus d'un deuxième revêtement, ici du laiton.

Le câble 20 selon le quatrième mode de réalisation pourra être utilisé en armature de carcasse ou de sommet.

### MESURES COMPARATIVES

On a comparé la tringle 20 selon le premier mode de réalisation et une tringle 100 de l'état de la technique. La tringle 100 de l'état de la technique présente une structure identique à celle de la tringle 20 mais les fils la constituant sont intégralement revêtus de bronze.

Dans un premier test, chaque tringle est incorporée dans un pneumatique pour véhicule de tourisme de dimension 215/70R16 que l'on étuve à 55°C dans une atmosphère à 100% d'humidité relative pendant 12 semaines.

Dans un deuxième test, chaque pneumatique est étuvé comme précédemment puis soumis à un test de roulage pendant 40 000 km sous différentes conditions d'angle, de vitesse et de charge. La composition de caoutchouc adjacente à la tringle est classique est telle que décrite dans le tableau 1 ci-dessous. La quantité de chacun de composants est donnée en pce (partie pour cent parties d'élastomère).

**Tableau 1**

| **Composant** | **Taux (pce)** |
|---|---|
| Caoutchouc naturel | 50 |
| Copolymère styrène-butadiène | 50 |
| Noir de carbone N550 | 90 |
| Anti-oxydant | 1,5 |
| Acide Stéarique | 1 |
| Accélérateur | 1 |
| Soufre Insoluble 20H | 6 |
| ZnO | 8 |

Tout type de caoutchouc naturel et de copolymère peuvent être utilisés par l'homme du métier. L'anti-oxydant est le N-1, 3-diméthylbutyl-N-phényl-para-phénylènediamine ("Santoflex 6-PPD"de la société FLEXSYS). L'accélérateur de vulcanisation est le N-dicyclohexylbenzothiazol sulfénamide ("Santocure DCBS" de la société FLEXSYS).

On décortique chaque pneumatique testé dans chaque premier et deuxième test afin d'observer chaque tringle d'une part, vis-à-vis du niveau d'adhésion résiduel et d'autre part, vis-à-vis de la corrosion. Le niveau d'adhésion est d'autant plus élevé qu'il reste de la gomme attachée à la tringle après le décorticage. Le niveau d'adhésion est évalué par des notes allant de 1 à 3 comme suit : 3 pour une tringle ne présentant aucune zone non gommée et donc aucune perte d'adhésion, 2 pour une tringle présentant entre 99% et 50% de zones gommées et 1 pour une tringle présentant moins de 50% de zones gommées. Le niveau de corrosion est évalué par des notes allant de A à C comme suit : A pour une tringle ne présentant pas de corrosion, B pour une tringle présentant des traces de corrosions (« points » de corrosion) et C pour une tringle présentant une corrosion importante (plus de 50% de la surface corrodée). On a résumé dans le tableau 2 ci-dessous les résultats des observations réalisées sur les tringles testées.

**Tableau 2**

| **Tringle testée** | **Tringle 100** | **Tringle 20** |
|---|---|---|
| 1^{er} test - Etuvage seul | 3A | 3A |
| 2^{eme} test - Etuvage + roulage | 2C | 3A |

On notera que la tringle selon l'invention permet de limiter l'action des agents corrosifs par rapport à la tringle de l'état de la technique et donc de limiter la perte d'adhésion avec la composition de caoutchouc adjacente.

L'invention ne se limite pas aux modes de réalisation précédemment décrits.

En effet, certains fils ou monofilament de l'élément de renfort peuvent être dans un matériau différent d'un métal.

De plus, les premier et deuxième revêtements pourront revêtir un même fil en acier. Dans ce cas, les premier et deuxième revêtements se succèdent le long du même fil en acier.

En outre, la couche interne de l'élément de renfort selon le premier mode de réalisation pourra comprendre un brin trancanné sur plusieurs tours ou bien plusieurs brins formant des anneaux et disposés les uns parallèlement aux autres.

En outre, dans le cas d'un élément de renfort comprenant des couches interne et externe, éventuellement complétées par une couche intermédiaire, le premier revêtement pourra revêtir une partie d'un ou des fils d'une couche autre que la couche externe, c'est-à-dire la couche interne et éventuellement la couche intermédiaire.

On pourra également imaginer, dans le cas d'un élément de renfort comprenant des couches interne et externe, éventuellement complétées par une couche intermédiaire, que le premier revêtement pourra revêtir au moins une partie et de préférence l'intégralité d'un fil de frette enroulé en hélice autour de la couche externe.

D'autre part, l'élément de renfort selon l'invention peut être monté sur tout type de pneumatique. Par exemple, l'élément de renfort peut être destiné à un pneumatique pour des véhicules industriels choisis parmi les camionnettes, des véhicules lourds tels que "Poids lourd" - i.e., métro, bus, engins de transport routier (camions, tracteurs, remorques), véhicules hors-la-route, aéronefs -, engins agricoles ou de génie civil, autres véhicules de transport ou de manutention.

Dans une variante non représentée d'un élément de renfort du type à plusieurs couches, l'élément de renfort peut être dépourvu de couche intermédiaire et ne comprendre qu'une couche interne et une couche externe.

## Revendications

1. Elément de renfort (20) pour pneumatique (10) comprenant un ou plusieurs fils (F0, F1, F2a, F2b ; Fa-Fm) comprenant une âme (28) en acier et **caractérisé en ce qu'**il comprend:
- un premier revêtement (R1) d'une première partie de l'âme du ou d'un des fils en acier (F2a ; Fb, Fd, Ff, Fh, Fj, Fl) réalisé en un premier métal ou en un premier alliage de métaux, le premier métal ou au moins l'un des métaux du premier alliage appartenant à un premier couple oxydant/réducteur dont le potentiel standard E°1 est strictement inférieur au potentiel standard E°0 du couple Fe²⁺/Fe, et
- un deuxième revêtement (R2) d'une deuxième partie de l'âme du ou d'un des fils en acier (F0, F1, F2b ; Fa, Fc, Fe, Fg, Fi, Fk, Fm) réalisé en un deuxième alliage de métaux, le deuxième alliage de métaux étant respectivement distinct du premier métal ou du premier alliage de métaux, au moins l'un des métaux du deuxième alliage appartient à un deuxième couple oxydant/réducteur, le deuxième revêtement (R2) étant un alliage cuivre-étain.

2. Elément de renfort (20) selon la revendication précédente, dans lequel le premier revêtement (R1) est du zinc.

3. Elément de renfort (20) selon l'une quelconque des revendications 1 à 2, sensiblement de révolution autour d'un axe (X) et comprenant :
- une couche interne (C0), et
- une couche externe (C2) comprenant au moins un fil (F2a, F2b) de couche externe enroulé en hélice autour de la couche interne (C0) sur plusieurs enroulements circonférentiels (E1-E12), le ou des fils de couche externe (F2a) comprenant la première partie revêtue par le premier revêtement (R1).

4. Elément de renfort (20) selon l'une quelconque des revendications 1 à 62, sensiblement de révolution autour d'un axe (X) et comprenant plusieurs enroulements circonférentiels d'au moins un fil (Fa-Fm) agencés axialement les uns à côté des autres sur plusieurs couches (Ci) radialement superposées les unes sur les autres.

5. Tringle (20), **caractérisée en ce qu'**elle comprend un élément de renfort (20) selon l'une quelconque des revendications précédentes.

6. Pneumatique (10), **caractérisé en ce qu'il** comprend au moins un élément de renfort (20) selon l'une quelconque des revendications 1 à 4 ou une tringle (20)selon la revendication 5.

## Patentansprüche

1. Verstärkungselement (20) für einen Reifen (10), welches einen oder mehrere Fäden (F0, F1, F2a, F2b; Fa-Fm) umfasst, die einen Kern (28) aus Stahl umfassen, **dadurch gekennzeichnet, dass** es umfasst:
- eine erste Beschichtung (R1) eines ersten Teils des Kerns des oder eines der Fäden aus Stahl (F2a; Fb, Fd, Ff, Fh, Fj, Fl), die aus einem ersten Metall oder einer ersten Legierung von Metallen hergestellt ist, wobei das erste Metall oder wenigstens eines der Metalle der ersten Legierung einem ersten Paar Oxidationsmittel/Reduktionsmittel angehört, dessen Standardpotential E°1 streng kleiner als das Standardpotential E°0 des Paares Fe²⁺/Fe ist, und
- eine zweite Beschichtung (R2) eines zweiten Teils des Kerns des oder eines der Fäden aus Stahl (F0, F1, F2b; Fa, Fc, Fe, Fg, Fi, Fk, Fm), die aus einer zweiten Legierung von Metallen hergestellt ist, wobei die zweite Legierung von Metallen von dem ersten Metall bzw. von der ersten Legierung von Metallen verschieden ist, wobei wenigstens eines der Metalle der zweiten Legierung einem zweiten Paar Oxidationsmittel/Reduktionsmittel angehört, wobei die zweite Beschichtung (R2) eine Kupfer-Zinn-Legierung ist.

2. Verstärkungselement (20) nach dem vorhergehenden Anspruch, wobei die erste Beschichtung (R1) Zink ist.

3. Verstärkungselement (20) nach einem der Ansprüche 1 bis 2, das im Wesentlichen rotationssymmetrisch um eine Achse (X) ist und umfasst:
- eine innere Schicht (C0) und
- eine äußere Schicht (C2), die wenigstens einen Faden (F2a, F2b) der äußeren Schicht umfasst, der in mehreren Umfangswindungen (E1-E12) spiralförmig um die innere Schicht (C0) gewickelt ist, wobei der Faden oder Fäden der äußeren Schicht (F2a) den mit der ersten Beschichtung (R1) beschichteten ersten Teil umfassen.

4. Verstärkungselement (20) nach einem der Ansprüche 1 bis 2, das im Wesentlichen rotationssymmetrisch um eine Achse (X) ist und mehrere Umfangswindungen wenigstens eines Fadens (Fa-Fm) umfasst, die in mehreren Schichten (Ci), die einander radial überlagern, axial nebeneinander angeordnet sind.

5. Wulstkern (20), **dadurch gekennzeichnet, dass** er ein Verstärkungselement (20) nach einem der vorhergehenden Ansprüche umfasst.

6. Reifen (10), **dadurch gekennzeichnet, dass** er wenigstens ein Verstärkungselement (20) nach einem der Ansprüche 1 bis 4 oder einen Wulstkern (20) nach Anspruch 5 umfasst.

## Claims

1. Reinforcing element (20) for a tyre (10) comprising one or more threads (F0, F1, F2a, F2b; Fa-Fm) comprising a steel core and **characterized in that** it comprises:
- a first coating (R1) of a first portion of the core of the or of one of the steel threads (F2a; Fb, Fd, Ff, Fh, Fj, Fl) made from a first metal or from a first alloy of metals, the first metal or at least one of the metals of the first alloy belonging to a first redox couple, the standard potential E°1 of which is strictly less than the standard potential E°0 of the Fe²⁺/Fe couple, and
- a second coating (R2) of a second portion of the core of the or of one of the steel threads (F0, F1, F2b; Fa, Fc, Fe, Fg, Fi, Fk, Fm) made from a second alloy of metals, the second alloy of metals being respectively different from the first metal or from the first alloy of metals, at least one of the metals of the second alloy belongs to a second redox couple, the second coating (R2) being a copper-tin alloy.

2. Reinforcing element (20) according to the preceding claim, in which the first coating (R1) is zinc.

3. Reinforcing element (20) according to any one of Claims 1 to 2, substantially axisymmetric about an axis (X) and comprising:
- an inner layer (C0), and
- an outer layer (C2) comprising at least one outer-layer thread (F2a, F2b) helically wound around the inner layer (C0) over several circumferential windings (E1-E12), the or some outer-layer threads (F2a) comprising the first portion coated by the first coating (R1).

4. Reinforcing element (20) according to any one of Claims 1 to 2, substantially axisymmetric about an axis (X) and comprising several circumferential windings of at least one thread (Fa-Fm) arranged axially next to one another over several layers (Ci) radially superposed on one another.

5. Bead wire (20), **characterized in that** it comprises a reinforcing element (20) according to any one of the preceding claims.

6. Tyre (10), **characterized in that** it comprises at least one reinforcing element (20) according to any one of Claims 1 to 4 or a bead wire according to Claim 5.
